# EUROPÄISCHE PATENTSCHRIFT

(11) **EP 1 950 480 B1**
(45) Veröffentlichungstag und Bekanntmachung des Hinweises auf die Patenterteilung: **15.07.2009**
(21) Anmeldenummer: 08100533.2
(22) Anmeldetag: 16.01.2008
(51) Int. Cl.: F16L 3/10, F16L 3/11

(54) **Rohrschelle**
Pipe clamp
Collier de serrage pour tuyaux

(30) Priorität: 25.01.2007 DE 102007000034
(43) Veröffentlichungstag der Anmeldung: 30.07.2008
(73) Patentinhaber: HILTI Aktiengesellschaft, 9494 Schaan (LI)
(72) Erfinder: Unverzagt, Stefan, 6800 Feldkirch (AT); Schierscher, Gabriel, 9494 Schaan (LI)
(74) Vertreter: Wildi, Roland

(56) Entgegenhaltungen:
- EP-A- 0 760 445
- EP-A- 0 995 936
- EP-A- 1 050 704
- DE-A1- 4 124 122
- DE-A1- 10 003 183
- DE-A1-5102005 002 23
- DE-U1- 20 017 277
- DE-U1- 29 602 102

## Beschreibung

Die Erfindung betrifft eine Rohrschelle mit einem ersten und einem zweiten Schellenbügel, die über jeweils an ihren Enden abragende Flansche mittels zwei Spannschrauben miteinander verbindbar sind, wobei zwei Flansche eine Öffnung für die Spannschrauben aufweisen, ein einem Flansch mit der Öffnung gegenüberliegender Flansch eine seitlich offene Einführöffnung aufweist und der andere einem Flansch mit der Öffnung gegenüberliegende Flansch eine Durchführöffnung aufweist, die eine in einer von den Spannschrauben aufgespannten Ebene verlaufende Abmessung mit einer den Durchmesser der Spannschraube übersteigenden lichten Weite aufweist.

Eine derartige Rohrschelle dient der Fixierung und Halterung von Leitungen, wie z. B. von Rohren, Kabeln oder dergleichen, an einem Untergrund oder an einem Träger mittels eines Befestigungselementes, wie beispielsweise einer Gewindestange.

Aus der DE 296 02 102 U1 ist eine Rohrschelle mit einem ersten und einem zweiten Schellenbügel bekannt, die über jeweils an ihren Enden abragende Flansche mittels zwei Spannschrauben miteinander verbindbar sind. Die beiden Flansche des ersten Schellenbügels weisen jeweils eine Öffnung mit Innengewinde für die Spannschrauben auf. An dem ersten Schellenbügel ist weiter ein Anschlusskopf zur Befestigung der Rohrschelle an einem Untergrund oder Träger mittels eines Befestigungselements vorgesehen. Ein Flansch des zweiten Schellenbügels weist eine seitlich offene Einführöffnung und der andere Flansch weist eine Durchführöffnung in Form eines Langlochs auf, wobei dessen Abmessung in der von den Spannschrauben aufgespannten Ebene eine den Durchmesser der Spannschraube übersteigende lichte Weite aufweist. Der zweite, nicht am Untergrund beziehungsweise am Träger festgelegte Schellenbügel ist um eine durch die Durchführöffnung hindurchgeführte Spannschraube verlaufende Längsachse seitlich verschwenkbar.

Nachteilig an der bekannten Lösung ist, dass bei einer nicht-hängenden Montage vor dem endgültigen Verspannen der Schellenbügel gegeneinander sich die geschlossene Rohrschelle ungewollt öffnen kann. Zudem ist das Handling solcher Rohrschellen insbesondere bei beengten Platzverhältnissen aufwändig.

Aufgabe der Erfindung ist es, eine Rohrschelle zu schaffen, die in verschiedenen Ausrichtungen eine hohe Sicherheit gegen ungewolltes Öffnen aufweist und dabei einfach betätigbar ist.

Die Aufgabe ist durch die Merkmale des unabhängigen Anspruchs gelöst. Vorteilhafte Weiterbildungen sind in den Unteransprüchen dargelegt.

Gemäss der Erfindung ist die durch die Durchführöffnung hindurchgeführte Spannschraube von einem federelastischen Element in der Durchführöffnung elastisch gehalten.

Beim Verschwenken oder Verschieben des einen Schellenbügels zu dem anderen Schellenbügel wird von dem federelastischen Element eine Rückstellkraft entgegen der Richtung zur Einführöffnung am anderen Flansch beziehungsweise am anderen Ende des entsprechenden Schellenbügels erzeugt. Das federelastische Element ist vorteilhaft an zumindest einem der Schellenbügel im Wesentlichen unverschieblich festgelegt. Beispielsweise ist das federelastische Element aus einem Gummi oder aus einem Federstahl gefertigt.

Die Einführöffnung weist vorteilhaft einen innenliegenden Hinterschnitt zur Aufnahme eines Abschnitts des Schafts der als Verschlussmittel dienenden Spannschraube auf. Mit dem federelastischen Element bleibt die erforderliche Verschiebung des einen Schellenbügels zum anderen Schellenbügel entlang der von den Spannschrauben aufgespannten Ebene zur Überbrückung der Distanz zwischen der Einführachse und der Achse der Spannschraube in der hintergriffenen Position gewährleistet. Zudem ist das federelastische Element vorteilhaft derart ausgebildet, dass ein zum anderen Schellenbügel verschwenkter Schellenbügel von dem federelastischen Element in die Einschwenkstellung gezwungen wird.

Alternativ ist das federelastische Element derart ausgebildet, dass aufgrund des federelastischen Elementes und/oder einer Reibung zwischen dem federelastischen Element und der Spannschraube der verschwenkbare Schellenbügel für die Montage der festzulegenden Leitung bis zum manuellen Verschwenken in der offenen Verschwenkstellung gehalten wird.

Durch die von dem federelastischen Element erzeugte Kraft auf die Schellenbügel verbleibt die in die Einführöffnung eingeführte Spannschraube auch in einer ungünstigen Montageposition sowie bei einer Nachjustierung der festzulegenden Leitung im geschlossenen Zustand der Rohrschelle im Hinterschnitt. Vorteilhaft tritt beim Schliessen der Rohrschelle ein akustisches wahrnehmbares Signal auf, welches dem Anwender die korrekte Ausrichtung der Schellenbügel zueinander vor dem Verspannen derselben gegeneinander mitteilt.

Bevorzugt ist das federelastische Element ein Bandabschnitt, der die Spannschraube und einen der Schellenbügel zumindest bereichsweise umgibt. Beispielsweise umgreifen zwei freie Enden des Bandes ein freies Ende eines Flansches, wobei der die beiden Enden verbindende Abschnitt, dem Flansch mit dem Einführschlitz zugewandt, die durch die Durchführöffnung hindurchgeführte Spannschraube umgreift. Bei einem Verschwenken oder Verschieben des bereichsweise von dem Band umfassten Schellenbügels übt das Band eine Rückstellkraft auf diesen aus. Die Durchführöffnung ist beispielsweise als Langloch ausgebildet, dessen längere Abmessung in der von den Spannschrauben aufgespannten Ebene verläuft.

Vorzugsweise ist der Bandabschnitt umfänglich geschlossen und somit einfach herstellbar sowie montierbar.

In einer weiteren bevorzugten Ausgestaltung der Erfindung ist das federelastische Element hülsenförmig ausgebildet und in der Durchführöffnung angeordnet. Das hülsenförmige, federelastische Element kann beispielsweise eine runde, ovale oder polygonale Aussenkontur aufweisen. Bei einem Verschwenken oder Verschieben der Schellenbügel zueinander wird das federelastische Element bereichsweise komprimiert und übt dadurch eine in der von den Spannschrauben aufgespannte Ebene wirkende Rückstellkraft auf den mit dem federelastischen Element versehenen Schellenbügel aus. Die Durchführöffnung ist beispielsweise als runde Öffnung oder als Langloch ausgebildet, wobei eine Abmessung, deren lichte Weite den Durchmesser der entsprechenden Spannschraube übersteigt, in der von den Spannschrauben aufgespannten Ebene verläuft.

Vorzugsweise weist das federelastische Element eine radial verlaufende Nut zum zumindest bereichsweisen Umgreifen des Randes der Durchführöffnung auf, so dass dieses formschlüssig in der Durchführöffnung im Flansch festlegbar ist.

Vorzugsweise sind die Durchführöffnung mit dem federelastischen Element und die Einführöffnung an den Flanschen eines Schellenbügels vorgesehen. Somit weist einer der Schellenbügel an beiden Flanschen beispielsweise die gleichen Öffnungen z. B. mit einem Innengewinde für die Spannschrauben auf. Der andere Schellenbügel weist die Durchführöffnung zur Anordnung des federelastischen Elementes an einem Flansch und die einseitig offene Einführöffnung am anderen Flansch auf.

Vorteilhaft ist der Schellen bügel aus Blech in einem Stanz-/Biegeverfahren beispielsweise aus einem Flachmaterial gefertigt.

Die Erfindung wird nachstehend anhand zweier Ausführungsbeispiele näher erläutert. Es zeigen:
- Fig. 1: Eine Seitenansicht auf ein erstes Beispiel einer erfindungsgemässen Rohrschelle;
- Fig. 2: einen Schnitt in vergrösserter Detaildarstellung gem. Detail II in Fig. 1;
- Fig. 3: den zweiten Schellenbügel der Rohrschelle im Grundriss zum Teil geschnitten gem. Linie III-III in Fig. 1;
- Fig. 4: eine Detailansicht eines zweiten Ausführungsbeispiels; und
- Fig. 5: eine Ansicht gem. Linie V-V in Fig. 4.

Grundsätzlich sind in den Figuren gleiche Teile mit den gleichen Bezugszeichen versehen.

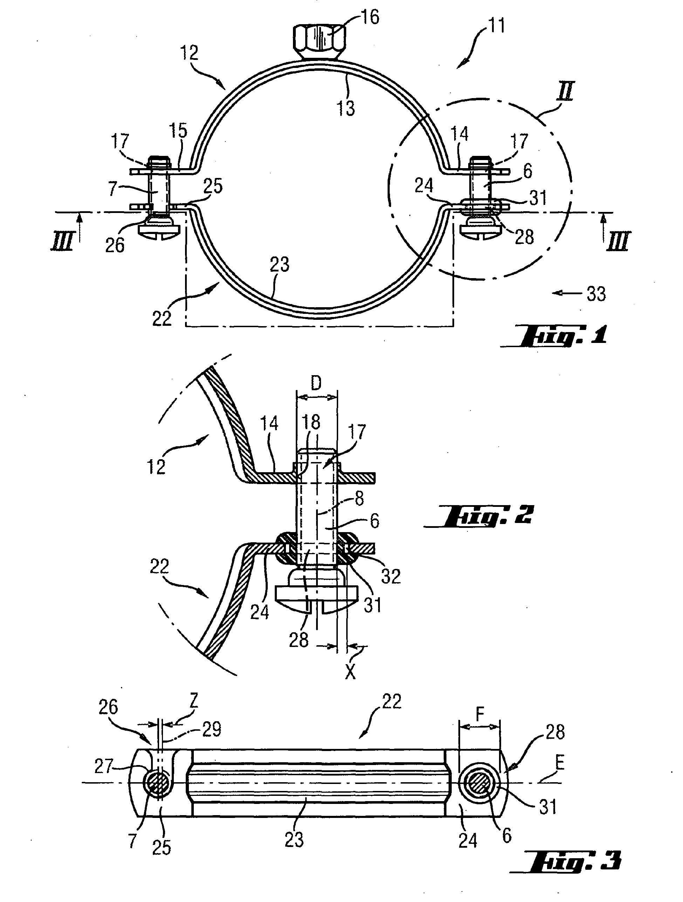

Die in den Figuren 1 bis 3 dargestellte Rohrschelle 11 weist einen ersten Schellenbügel 12 mit einem eine Krümmung des Schellenbügels 12 ausbildenden im Wesentlichen halbkreisförmig gebogenen Abschnitt 13 auf, an dessen Enden jeweils ein Flansch 14 und 15 krümmungsseitig beziehungsweise radial nach aussen abragt. In der Mitte des gebogenen Abschnitts 13 ist radial aussen ein Anschlusskopf 16 zur Befestigung der Rohrschelle 11 an einem Untergrund oder Träger mittels einem Befestigungselementes (hier nicht dargestellt) angeordnet. In den Flanschen 14 und 15 ist jeweils eine Öffnung 17 mit einem umlaufenden Bund und einem Innengewinde 18 für die Spannschrauben 6 und 7 vorgesehen.

Die Rohrschelle 11 weist weiter einen zweiten Schellenbügel 22 mit einem eine Krümmung ausbildenden im Wesentlichen halbkreisförmig gebogenen Abschnitt 23 auf, an dessen Enden jeweils ein Flansch 24 und 25 krümmungsseitig beziehungsweise radial nach aussen abragt. In dem Flansch 25 ist eine seitlich offene Einführöffnung 26 mit einem Hinterschnitt 27 für die Spannschraube 7 vorgesehen. In dem Flansch 24 ist eine Durchführöffnung 28 für die Spannschraube 6 vorgesehen, die einen grösseren Durchmesser als Abmessung F als der Durchmesser D der Spannschraube 6 aufweist. Die Durchführöffnung 28 weist eine in einer von den Spannschrauben 6 und 7 aufgespannten Ebene E verlaufende Abmessung F mit einer den Durchmesser D der Spannschraube 6 übersteigenden lichten Weite auf. Der zweite Schellenbügel 22 ist um eine Längsachse 8 der Spannschraube 6 sowie in einem gewissen Bereich quer zu dieser Längsachse 8 zu dem ersten Schellenbügel 12 verschwenkbar.

In der Durchführöffnung 28 ist ein hülsenförmig ausgebildetes, federelastisches Element 31 angeordnet, das die durch die Durchführöffnung 28 hindurchgeführte Spannschraube 6 in der Durchführöffnung 28 elastisch hält. Das federelastische Element 31 wirkt unter anderem in der von den Spannschrauben 6 und 7 aufgespannten Ebene E. Das federelastische Element 31 weist eine radial verlaufende Nut 32 zum bereichsweisen Umgreifen des Randes der Durchführöffnung 28 im Flansch 24 auf.

Zum Schliessen einer beispielsweise am Untergrund festgelegten Rohrschelle 11 wird der zweite Schellenbügel 22 um die Längsachse 8 der Spannschraube 6 verschwenkt, bis der Bereich des Flansches 25 mit der Einführöffnung 26 mit der Spannschraube 7 in Anlage kommt. Mittels Druck auf den zweiten Schellenbügel 22 in Richtung des Pfeils 33 wird das federelastische Element 31 bereichsweise komprimiert und der zweite Schellenbügel 22 maximal bis um den Betrag X in der von den Spannschrauben 6 und 7 aufgespannten Ebene E in Richtung des Pfeils 33 verschoben. Der Betrag X ist derart gewählt, dass dieser grösser oder gleich dem Betrag der Differenz Z zwischen der Einführachse 29 der Einführöffnung 26 und der Achse der Spannschraube 7 ist, wenn diese im Hinterschnitt 27 der Einführöffnung 26 liegt. Wird der Druck auf den zweiten Schellenbügel 22 aufgehoben, dehnt sich das federelastische Element 31 wieder aus und die Spannschraube 7 ist sicher in der Einführöffnung 26 gehalten.

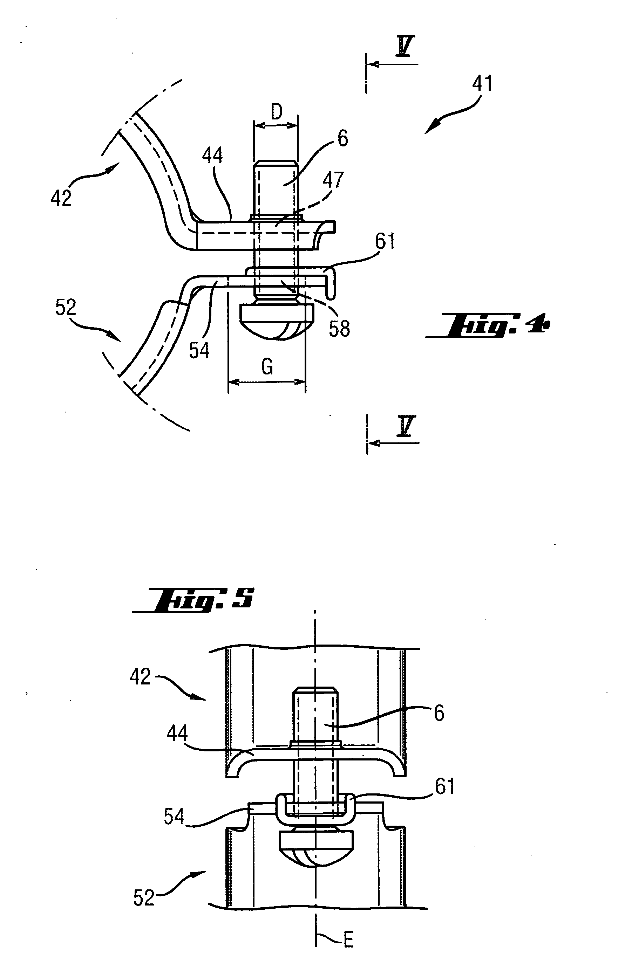

Die in den Figuren 4 und 5 nur in einem Ausschnitt dargestellte Rohrschelle 41 weist einen ersten Schellenbügel 42 mit einem abragenden Flansch 44 auf, der eine Öffnung 47 mit einem umlaufenden Bund und einem Innengewinde für die Spannschraube 6 aufweist. Weiter weist die Rohrschelle 41 einen zweiten Schellenbügel 52 mit einem abragenden Flansch 54 auf, in dem ein Langloch als Durchführöffnung 58 für die Spannschraube 6 vorgesehen ist. Die Durchführöffnung 58 weist eine in einer von den Spannschrauben 6 und 7 aufgespannten Ebene verlaufende Abmessung G auf, die eine den Durchmesser D der Spannschraube 6 übersteigende lichte Weite aufweist.

Weiter umfasst die Rohrschelle 41 ein federelastisches Element 61 in Form eines umfänglich geschlossenen Bandabschnitts, das die durch die Durchführöffnung 58 hindurchgeführte Spannschraube 6 und andererseits das freie Ende des Flansches 54 des zweiten Schellenbügels 52 bereichsweise umgibt und dadurch die Spannschraube 6 elastisch in der Durchführöffnung 58 hält. Das federelastische Element 61 wirkt in der von den Spannschrauben 6 und 7 aufgespannten Ebene E.

## Patentansprüche

1. Rohrschelle mit einem ersten (12; 42) und einem zweiten Schellenbügel (22; 52), die über jeweils an ihren Enden abragende Flansche (14, 15, 24, 25; 44, 54) mittels zwei Spannschrauben (6, 7) miteinander verbindbar sind, wobei
zwei Flansche (14, 15; 44) eine Öffnung (17; 47) für die Spannschrauben (6, 7) aufweisen, ein einem Flansch (15) mit der Öffnung (17) gegenüberliegender Flansch (25) eine seitlich offene Einführöffnung (26) aufweist und der andere einem Flansch (14) mit der Öffnung (17) gegenüberliegende Flansch (24; 54) eine Durchführöffnung (28; 58) aufweist, die eine in einer von den Spannschrauben (6, 7) aufgespannten Ebene (E) verlaufende Abmessung (F; G) mit einer den Durchmesser (D) der Spannschraube (6) übersteigenden lichten Weite aufweist, **dadurch gekennzeichnet, dass**
die durch die Durchführöffnung (28; 58) hindurchgeführte Spannschraube (6) von einem federelastischen Element (31; 61) in der Durchführöffnung (28; 58) elastisch gehalten ist.

2. Rohrschelle nach Anspruch 1, **dadurch gekennzeichnet, dass** das federelastische Element (61) ein Bandabschnitt ist, der die Spannschraube (6) und einen der Schellenbügel (52) zumindest bereichsweise umgibt.

3. Rohrschelle nach Anspruch 2, **dadurch gekennzeichnet, dass** der Bandabschnitt umfänglich geschlossen ist.

4. Rohrschelle nach Anspruch 1, **dadurch gekennzeichnet, dass** das federelastische Element (31) hülsenförmig ausgebildet und in der Durchführöffnung (28) angeordnet ist.

5. Rohrschelle nach Anspruch 4, **dadurch gekennzeichnet, dass** das federelastische Element (31) eine radial verlaufende Nut (32) zum zumindest bereichsweisen Umgreifen des Randes der Durchführöffnung (28) aufweist.

6. Rohrschelle nach Anspruch 4 oder 5, **dadurch gekennzeichnet, dass** die Durchführöffnung (28; 58) mit dem federelastischen Element (31; 61) und die Einführöffnung (26) an den Flanschen (24, 25; 54) eines Schellenbügels (22; 52) vorgesehen sind.

## Claims

1. Pipe saddle with a first (12; 42) and a second saddle bracket (22; 52), which can be connected with each other via flanges (14, 15; 24,25; 44, 64) in each case projecting at their ends, by means of two tightening screws, wherewith two flanges (14, 15; 44) exhibit an opening (17;47) for the tightening screws (6, 7), a flange (25) opposite a flange (15) with the opening (17) exhibits a laterally open insertion opening (26) and the other flange (24; 54) opposite a flange (14) with the opening (17) exhibits a take-through opening (28; 58), which exhibits a distance (F; G) running in a plane (E) fixed by the tightening screws (6, 7) with a clear width exceeding the diameter (D) of the tightening screw (6), **characterised by the fact that**
the tightening screw (6) taken through the take-through opening (28; 58) is held elastically in the take-through opening (28; 58) by a spring elastic element (31; 61).

2. Pipe saddle according to claim 1, **characterised by** the fact that the spring elastic element (61) is a section of tape which surrounds the tightening screw (6) and one of the saddle brackets (52) at least regionally.

3. Pipe saddle according to claim 2, **characterised by** the fact that the section of tape is extensively closed.

4. Pipe saddle according to claim 1, **characterised by** the fact that the spring elastic element (31) is formed sleeve-shaped and is fitted in the take-through opening (28).

5. Pipe saddle according to claim 4, **characterised by** the fact that the spring elastic element (31) exhibits a radially running groove (32) for the at least regional holding of the edge of the take-through opening (28).

6. Pipe saddle according to claim 4 or 5, **characterised by** the fact that the take-through opening (28; 58) with the spring elastic element (31; 61) and the inlet opening (26) are provided on the flanges (24, 25; 54) of a saddle bracket (22; 52).

## Revendications

1. Collier à tube comprenant un premier (12 ; 42) et un second étrier de collier (22 ; 52), lesquels peuvent être reliés l'un à l'autre, par l'intermédiaire de brides (14, 15, 24, 25 ; 44, 54) dépassant à chacune de leurs extrémités, au moyen de deux vis de serrage (6, 7), deux brides (14, 15 ; 44) comportant une ouverture (17 ; 47) pour les vis de serrage (6, 7), une bride (25) opposée à une bride (15) comportant l'ouverture (17) comportant une ouverture d'introduction ouverte latéralement (26), et l'autre bride (24 ; 54) opposée à la bride (14) comportant l'ouverture (17) comportant une ouverture traversante (28 ; 58), laquelle présente, dans un plan (E) défini par les vis de serrage (6, 7), une dimension (F ; G) avec une ouverture libre supérieure au diamètre (D) de la vis de serrage (6), **caractérisé en ce que** la vis de serrage (6) traversant l'ouverture traversante (28 ; 58) est maintenue élastiquement dans L'ouverture traversante (28 ; 58) par un élément de ressort (31 ; 61).

2. Collier à tube selon la revendication 1, **caractérisé en ce que** l'élément de ressort (61) est une portion de bande qui entoure au moins par endroits la vis de serrage (6) et un des étriers de collier (52).

3. Collier à tube selon la revendication 2, **caractérisé en ce que** la portion de bande pressente une circonférence fermée.

4. Collier à tube selon la revendication 1, **caractérisé en ce que** l'élément de ressort (31) est conformé en manchon et est disposé dans l'ouverture traversante (28).

5. Collier à tube selon la revendication 4, **caractérisé en ce que** l'élément de ressort (31) est pourvu d'une rainure s'étendant radialement (32) pour enserrer au moins par endroits le bord de l'ouverture traversante (28).

6. Collier à tube selon la revendication 4 ou 5, **caractérisé en ce que** l'ouverture traversante (28 ; 58) comportant l'élément de ressort (31 ; 61) et l'ouverture d'introduction (26) sont ménagées dans les brides (24, 25 ; 54) d'un étrier de collier (22 ; 52).
